# EUROPEAN PATENT APPLICATION

(11) **EP 2 929 978 A2**
(43) Date of publication of application: **14.10.2015**
(21) Application number: 15161012.8
(22) Date of filing: 26.03.2015
(51) Int. Cl.: B23Q 1/48, B23Q 5/10, B23Q 5/22, B23Q 5/32

(54) **Boring machine tool**

(30) Priority: 08.04.2014 IT MO20140009 U
(71) Applicant: PAMA S.P.A., 38068 Rovereto (TN) (IT)
(72) Inventor: Nainer, Alberto, 38123 Trento (IT); Procaccini, Mauro, 38068 Rovereto (TN) (IT)
(74) Representative: Crugnola, Pietro

(57) **Abstract**

A boring machine tool comprising a supporting element (2), a hollow spindle (4) arranged inside said supporting element (2), a boring bar (3) arranged inside said hollow spindle (4) and rotated by the hollow spindle (4) around a rotation axis (A), an electric motor (5) that rotates said hollow spindle (4) around said rotation axis (A) said electric motor (5) comprising a stator (7) that is suppliable by a source of electric power and a rotor (8) splined directly on said hollow spindle (4).

## Description

This utility model relates to a boring machine tool.

Boring machine tools comprise a hollow spindle, rotatable around a fixed support of the boring machine tool, inside which a boring bar is arranged which receives the rotation motion from the hollow spindle. In particular, the rotation motion is transmitted by the hollow spindle to the boring bar through the use of transmission means comprising, for example, one or more tabs that are fixed to the hollow spindle and are slidably engaged in respective longitudinal grooves of the boring bar that prevent the corresponding rotation between the hollow spindle and the boring bar and thus transmit a twisting moment, or torque, to the boring bar. Further, the hollow spindle guides the boring bar slidably and axially by means of one or more plain or hydrostatic bearings, so-called brasses or bushes, contained in the interior thereof.

The hollow spindle receives the rotation motion from a drive motor, by, for example, a gear transmission.

The gear transmission increases the noise of the machine and introduces clearances between the motor and tool, which can cause untimely wear or damage to the tool and affect the quality of the surface finish that is obtainable in workpiece machining.

The object of this utility model is to provide a boring machine tool that does not have the aforementioned drawbacks.

The aforesaid object is achieved by a boring machine according to claim 1.

Owing to the fact that the motor that drives the spindle is splined directly on the spindle a reduction of clearances is obtained between the motor and the tool because the only clearance that remains is that between the grooves of the boring bar and the dragging tabs, which is normally very small. This enables wear of the tool fitted on the spindle to be reduced and a better level of surface finish to be obtained in machining of the workpieces. Further, the total absence of gears or other systems for transmitting motion from the motor to the spindle causes a greater quietness of the machine.

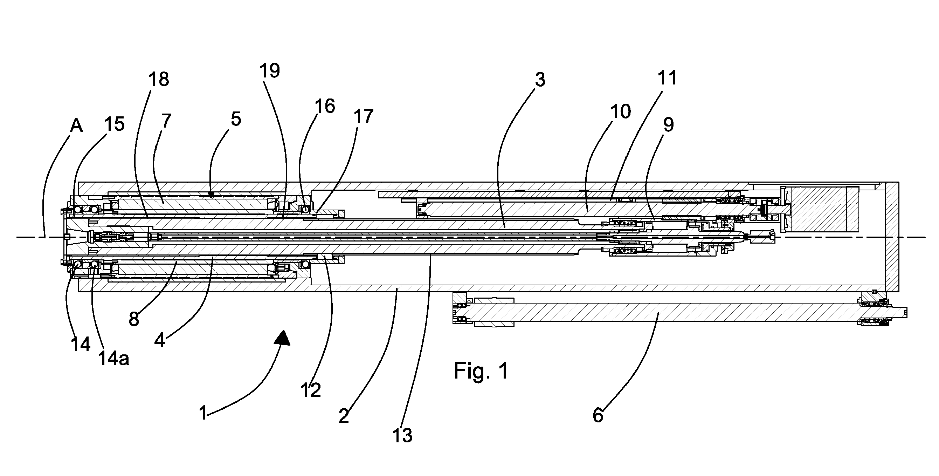

Further features and advantages of this utility model will be clear from the following description of one embodiment, provided by way of non-limiting example, with reference to the attached drawing in which Figure 1 is a longitudinal section view of the spindle of a boring machine with the respective drive motor.

In Figure 1 a longitudinal section of a boring machine tool is shown, in particular a longitudinal section of that portion 1 of machine that comprises the drive of the spindle of the machine. The aforesaid portion 1 comprises a supporting element 2 inside which the drive components 1 are housed and supported, in particular, a boring bar 3, a hollow spindle 4, inside which the boring bar 3 is housed, and a motor 5 for rotating the spindle 4 around a rotation axis A. The supporting element 2 is slidable in a direction that is parallel to the rotation axis A and is driven to slide in said direction by a ball screw 6.

The motor 5 is an electric motor that comprises a stator 7 that is suppliable by a source of electric power and a rotor 8, which is splined directly on the spindle 4, so as to rotate the spindle 4.

The boring bar 3 is connected to a slide 9 so as to be able to slide inside the spindle 4. The slide 9 is driven to slide in a direction that is parallel to the rotation axis A of the spindle 3, by a further ball screw 10, along a linear guide 11 fixed inside the supporting element 2. The hollow spindle 4 rotates the boring bar 3 by dragging tabs 12 that engage grooves 13 of the boring bar 3.

The spindle 4 is mounted on a pair of bearings 14, 14a, which are arranged at a first end 15 of the spindle 4 facing the outside of the supporting element 2, and on a further bearing 16 arranged at a second end 17 of the spindle 4 facing inside the supporting element 2. The bearings 14, 14a and the further bearing 16 are ball bearings with ceramic balls. The use of this type of ball bearings enables higher rotation speeds to be achieved than with traditional ball bearings with metal balls. Further, the ceramic balls make the bearings insensitive to possible eddy currents that may be generated near the motor 5.

The bearings 14, 14a and 16 are bearings with a variable preload, which enables great stiffness to be achieved at low speed and simultaneously enables high rotation speeds to be obtained at low loads. Between the spindle 4 and the boring bar 3 a first brass 18 and a second brass 19 are interposed, arranged at opposite ends of the spindle 4, said brasses guiding the sliding of the boring bar in a direction parallel to the rotation axis A of the spindle 4.

The assembly constituted by the spindle 4, with the respective bearings 14, 14a, 16 and by the motor 5 is made in such a way as to be able to be assembled separately from the supporting element 2 so as to be able to be inserted therein and extracted therefrom easily, as if it were a cartridge element, without the need to remove the supporting element 2. This makes the replacement of the spindle 4/motor 5 unit particularly convenient and easy in the event of faults.

Driving the spindle 4, obtained by splining directly on the spindle 4 the rotor 8 of the motor 5, enables the clearances between the motor and the boring bar 3 to be minimised. In fact, only clearance between the motor 5 and the boring bar 3 is the clearance between the grooves 13 of the boring bar 3 and the dragging tabs 12, which normally has a very low value.

Minimising the clearances between the motor 5 and the boring bar 3 enables wear and the risk of untimely damage to the boring bar 3 to be noticeably reduced.

Further, reduction of the clearances enables greater precision in machining the workpieces with the boring bar 3, i.e. a better surface finish of the workpieces to be obtained.

Driving the spindle 4 by splining the rotor 8 directly on the spindle further enables the quietness of operation of the spindle - boring bar assembly to be improved significantly as there exist no gears or other types of motion transmission interposed between the motor 5 and the spindle 4.

## Claims

1. Boring machine tool comprising a supporting element (2), a hollow spindle (4) arranged inside said supporting element (2), a boring bar (3) arranged inside said hollow spindle (4) and rotatable by the hollow spindle (4) around a rotation axis (A), an electric motor (5) suitable for rotating said hollow spindle (4) around said rotation axis (A), said electric motor (5) comprising a stator (7) that is suppliable by a source of electric power and a rotor (8), **characterised in that** said rotor (8) is splined directly on said hollow spindle (4).

2. Machine tool according to claim 1, wherein said hollow spindle (4) is supported at its ends (15, 17) by ball bearings (14, 14a, 16) with ceramic balls.

3. Machine tool according to claim 2, wherein said ball bearings (14, 14a, 16) are bearings with a variable preload.

4. Machine tool according to any preceding claim, wherein an assembly consisting of the spindle (4), with the respective bearings (14, 14a, 16) and of the motor (5) is made in such a way as to be able to be assembled separately from the supporting element (2).

5. Driving system for driving a spindle (4) of a boring machine, said spindle (4) being hollow and housing a boring bar (3) within it, said boring bar being rotatable by the hollow spindle (5) around a rotation axis (A), **characterised in that** on said hollow spindle (5) a rotor (8) of an electric motor (5) is splined that is suitable for rotating said hollow spindle around said rotation axis (A).
